# NEUE EUROPÄISCHE PATENTSCHRIFT

(11) **EP 0 773 393 B2**
(45) Veröffentlichungstag und Bekanntmachung des Hinweises auf die Entscheidung über den Einspruch: **31.05.2006**
(45) Hinweis auf die Patenterteilung: 26.09.2001
(21) Anmeldenummer: 96117067.7
(22) Anmeldetag: 24.10.1996
(51) Int. Cl.: F16K 17/16, B65D 90/36

(54) **Druckentlastungsvorrichtung**
Pressure relief device
Dispositif de détente d'une pression

(30) Priorität: 11.11.1995 DE 19542092
(43) Veröffentlichungstag der Anmeldung: 14.05.1997
(73) Patentinhaber: Rembe GmbH Safety + Control, 59918 Brilon (DE)
(72) Erfinder: Penno, Bernhard, 59929 Brilon (DE)
(74) Vertreter: Basfeld, Rainer

(56) Entgegenhaltungen:
- EP-A- 0 055 909
- EP-A- 0 456 953
- US-A- 4 821 909
- US-A- 5 167 337
- US-A- 5 368 180

## Beschreibung

Die vorliegende Erfindung betrifft eine Druckentlastungsvorrichtung umfassend eine Berstscheibe mit einem mittleren gewölbten Teil und einem äußeren umlaufenden flachen Flansch, in dessen Bereich die Berstscheibe befestigbar ist, wobei die Berstscheibe um den mittleren gewölbten Teil herum angeordnete Schlitze aufweist, die jeweils durch kürzere Materialstege unterbrochen sind und wobei diese Materialstege als Sollbruchstelle dienen, wobei im Umfangsbereich der Berstscheibe zumindest abschnittsweise an wenigstens einer Seite eine flache Dichtung vorgesehen ist und wobei die Berstscheibe zwischen zwei Teilen eines Befestigungsrahmens im Bereich ihres Flansches unter Klemmwirkung festspannbar ist und wobei die Sollbruchstellen im Zwischenraum zwischen dem Oberteil und dem Unterteil des Befestigungsrahmens angeordnet sind.

Beispielsweise aus der US-PS 5,368,180 ist eine Druckentlastungsvorrichtung der eingangs genannten Art bekannt. Hier handelt es sich um eine Druckentlastungsvorrichtung, die eine kuppelförmige Berstscheibe mit einer Perforation und gegebenenfalls einer Dichtung aufweist.
Als nachteilig erweistsich jedoch, daß die Dichtung und die Berstscheibe nicht so befestigt werden können, daß eine sichere Befestigung ohne Beeinträchtigung der Ansprechzeit der Berstscheibe sowie eine Wahrung der hygienischen Anforderungen gewährleistet werden kann.

Eine weitere Druckentlastungsvorrichtung ist aus der EP-B 0 456 935 bekannt.

Bei dieser ist die Berstscheibe im Bereich ihres außen umlaufenden flachen Flansches zwischen einem Unterteil und einem Oberteil eines Befestigungsrahmens eingespannt, wobei zwischen den beiden Teilen des Befestigungsrahmens und der Berstscheibe jeweils Dichtungen angeordnet sind und sich diese Dichtungen über den vom Befestigungsrahmen abgedeckten Teil nach innen und somit auch ein Stück in den gewölbten Bereich der Berstscheibe hinein erstrecken. Bei dieser bekannten Druckentlastungsvorrichtung sind außerdem die Schlitze und die diese Schlitze verbindenden Materialstege, die als Sollbruchstellen dienen, ebenfalls bereits im Randbereich des gewölbten Abschnitts der Berstscheibe angeordnet, so daß die Sollbruchstellen nicht mehr von der Klemmwirkung der beiden gegeneinander verspannten Teile des Befestigungsrahmens erfaßt werden und damit im Überlastungsfall die Berstscheibe ihre eigentliche Funktion überhaupt erfüllen kann. Die Dichtungen erstrecken sich aber über den gewölbten Bereich der Berstscheibe und werden dort nicht von der Klemmwirkung der beiden Teile des Befestigungsrahmens erfaßt. Dies bedeutet, daß die Gefahr besteht, daß sich die Dichtungen dort lösen können, insbesondere wenn aggressive Dämpfe oder Flüssigkeiten auf die Dichtungen einwirken und das Dichtungsmaterial selbst angreifen bzw. die Haftung des Dichtungsmaterials auf der in der Regel metallischen Fläche der Berstscheibe beeinträchtigen. Da derartige Berstscheiben häufig in Behältern zum Einsatz kommen, in denen hohe Anforderungen an die Hygiene gestellt werden, z. B. wenn es sich um Apparaturen handelt, in denen Lebensmittelprodukte behandelt werden, sind solche mit der Zeit verwitternde Dichtungen dort nicht akzeptabel. Wenn die Dichtungen sich lösen, besteht die Gefahr, daß der Behälter im Umfangsbereich der Berstscheibe nicht mehr ausreichend abgedichtet ist.

Da bei diesem bekannten Behälter die Sollbruchstelle beidseitig durch Dichtungen abgeklebt ist, besteht auch die Gefahr, daß im Berstfalle die Sollbruchstelle erst mit einer Verzögerung anspricht und somit die Berstscheibe nicht die in den diesbezüglichen Normen geforderte Ansprechzeit gewährleistet.

Gegenüber der eingangs genannten vorbekannten Druckentlastungsvorrichtung besteht die Aufgabe der vorliegenden Erfindung darin, eine Druckentlastungsvorrichtung mit einer Berstscheibe zu schaffen, die zum einen die hygienischen Anforderungen erfüllt und bei der außerdem die Berstscheibe so befestigt ist, daß die sichere Befestigung ohne Beeinträchtigung der Ansprechfunktion der Berstscheibe gewährleistet ist.

Die Lösung dieser Aufgabe liefert eine erfindungsgemäße Druckentlastungsvorrichtung der vorgenannten Art mit den kennzeichnenden Merkmalen des Hauptanspruchs.

Gemäß der Erfindung ist vorgesehen, daß die Sollbruchstellen mit den Schlitzen und den kürzeren Materialstegen zwischen den Schlitzen im Bereich des äußeren umlaufenden flachen Flansches liegen und zwischen den beiden Teilen des Befestigungsrahmens liegen mittels derer die Berstscheibe in ihrem Flanschbereich eingespannt wird. Die Sollbruchstelle befindet sich demnach vom äußeren Rand der Wölbung der Berstscheibe aus betrachtet ein Stück nach außen hin versetzt.

Zur Dichtung wird ein flacher Dichtungsring verwendet, der zwischen den beiden Teilen des Befestigungsrahmens liegt, die miteinander verspannt werden und die Berstscheibe im Flanschbereich festklemmen. Der (oder auch die) Dichtungsring(e) erstreckt sich somit nur über den Flansch der Berstscheibe, nicht aber über den gewölbten Teil der Berstscheibe. Bei der erfindungsgemäßen Ausführungsform ragt aber nur der gewölbte Teil der Berstscheibe in den Behälter, während der flache äußere Flanschteil im Bereich des Befestigungsrahmens liegt und dort festgeklemmt wird, so daß keine abgeklebten Dichtungen mit den z. B. in einem Behälter befindlichen Dämpfen oder Flüssigkeiten in Kontakt treten und die Dichtung sich nicht lösen kann. Damit sind die hygienischen Probleme behoben.

Gemäß der vorliegenden Erfindung werden zwei Klemmringe verwendet, die übereinander liegen und unterschiedlich breit sind. Nur der eine dieser beiden Klemmringe deckt die Sollbruchstelle ab, während der andere der beiden Klemmringe sich von jenseits der Sollbruchstelle nach außen erstreckt. Außerhalb der Sollbruchstelle ist dann eine ausreichende Klemmkraft gegeben, um die Berstscheibe in ihrem äußeren flachen Flanschbereich festzuhalten und sicher zu befestigen. Im Bereich der Sollbruchstelle besteht dagegen nur eine geringere Klemmkraft, so daß gewährleistet ist, daß die Sollbruchstelle rechtzeitig ohne Verzögerung anspricht und die Berstscheibe ihre Funktion erfüllen kann. Gleichzeitig bietet aber der zweite Klemmring, der die Sollbruchstelle zwar überdeckt aber ohne wesentliche oder mit nur einer geringen Klemmkraft in dem gesamten Flanschbereich also bis zum Beginn der Wölbung hin, eine Abstütz- und Widerlagerfunktion für den Flansch der Berstscheibe.

*Dabei* liegen die beiden Klemmringe übereinander auf einer Seite des Flanschs der Berstscheibe. Weiter ist es bevorzugt, daß der Dichtungsring bei dieser Variante auf der anderen Seite des Flanschs der Berstscheibe liegt, so daß dieser Flansch auf seiner einen Seite durch den breiteren der beiden Klemmringe abgestützt wird und auf seiner anderen Seite durch den Dichtungsring abgestützt wird. Die Sollbruchstelle ist bei dieser Variante aber nur von einer Seite von einer Dichtung abgedeckt, so daß die Berstfunktion nicht negativ beeinflußt wird. Vorzugsweise besteht der Dichtungsring aus einem gummiartigen Material etwa mittlerer Härte, d. h., das Material des Dichtungsrings muß ausreichend hart sein, um noch die erforderliche Abstütz- und Widerlagerfunktion für den Flansch der Berstscheibe zu erfüllen. Andererseits ist das Material der Dichtung wiederum nicht zu hart auszuwählen, damit für das Erzielen der Dichtfunktion keine zu hohe Klemmkraft notwendig ist, denn eine zu hohe Klemmkraft, die von den beiden Teilen des Befestigungsrahmens ausgeübt und über die beiden Klemmringe in den Flansch der Berstscheibe eingeleitet wird, würde wiederum negativ die Berstfunktion beeinflussen.

Die in den Unteransprüchen genannten Merkmale betreffen bevorzugte Weiterbildungen der erfindungsgemäßen Aurgabenlosung,

Im folgenden wird die vorliegende Erfindung anhand eines Ausführungsbeispiels unter Bezugnahme auf die beiliegenden Zeichnungen näher beschrieben. Dabei zeigen
- Fig 1: eine erfindungsgemäße Befestigungsvorrichtung für eine Berstscheibe in Teilansicht im Schnitt:
- Fig. 2: eine Draufsicht auf eine erfindungsgemäße Berstscheibe mit Befestigungsvorrichtung.

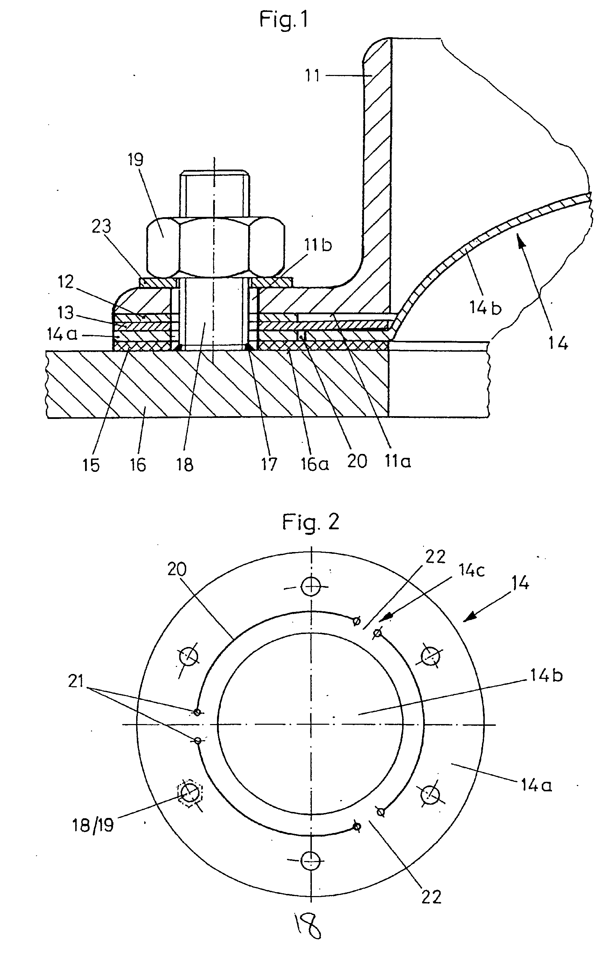

Zunächst wird auf Fig. 2 Bezug genommen. Die Darstellung zeigt eine Berstscheibe 14, die im vorliegenden Ausführungsbeispiel rund ist, die aber ebensogut auch rechteckig sein oder eine andere Umrißform haben kann. Die erfindungsgemäße Berstscheibe 14 hat einen mittleren gewölbten Teil 14b und außen ringsum um diesen mittleren Teil laufend einen flachen Befestigungsflansch 14a. Im Bereich dieses äußeren Befestigungsflanschs 14a wird die Berstscheibe z. B. über Schrauben 18 und Muttern 19, die über den Umfang verteilt angeordnet sind, über einen Befestigungsrahmen oder dergleichen an einem Bauteil wie z. B. einem Behälter, der explosionsgeschützt werden soll, befestigt. In der Darstellung gemäß Fig. 2 ist die Berstscheibe 14 schematisch vereinfacht dargestellt und der Behälter ist nicht gezeigt.

Ringsum den gewölbten mittleren Teil 14b der Berstscheibe 14 ist im Bereich des Befestigungsflanschs 14a ein schmaler in teilkreisförmigen Abschnitten verlaufender Schlitz 20 vorgesehen dessen einzelne teilkreisförmige Abschnitte jeweils durch Materialstege 22 des Flansches 14a der Berstscheibe 14 unterbrochen sind. Diese Materialstege 22 bilden die Sollbruchstelle im Berstfall wenn die Berstscheibe in Funktion tritt. Die teilkreisförmigen Schlitze 20 sind beidseitig an ihren Enden jeweils mit Bohrungen 21 versehen die hier kreisrund sind und die dazu dienen jeweils das Ende des Schlitzes 20 und damit jeweils die Länge der Matenalstege 22 bei der Fertigung maßhch genau festzulegen, da von der Große der Matenalstege 22 und der Sollbruchstelle die Ansprecheigcnschatten der Berstscheibe im Berstfalle abhängen Die teilkreislormigen Schlitze 20 können sehr schmal sein und B nur eine Breite von weniger als 1 mm oder Bruchteilen eines mm betragen, die Bohrungen 21 dagegen haben in der Regel einen etwas größeren Durchmesser vorzugsweise ist der Durchmesser der Bohrungen 21 im Bereich von einem oder mehreren mm oder sogar 1 cm oder mehr.

Nachfolgend wird nun die Befestigung der erfindungsgemäßen Berstscheibe 14 unter Bezugnahme auf Fig. 1 näher beschrieben In der Zeichnung Fig 1 ist nur ein Teil der Befestigungseinrichtung im Schnitt dargestellt, wobei die Belestigungsteile namlich der Befestigungsrahmen 11 auf der Oberseite der Berstscheibe 14 und das korrespondierende Unterteil 16 des Befestigungsrahmens, das auch ein Teil des Behälters sein kann, an dem die Berstscheibe 14 befestigt wird, sind hier nur schematisch vereinfacht dargestellt da es auf deren Ausbildung im einzeinen nicht ankommt. Wie man sieht ist der Befestigungsrahmen 11 auf der Oberseite der Berstscheibe 14 ein im Längsschnitt winkellörmiger Rahmen mit einer vorzugsweise ebenen flanschförmigen Befestigungsfläche 11a. Ebenso hat das Unterteil 16 des Befestigungsrahmens oberseitig eine vorzugsweise ebene Fläche 16a so daß sich durch die Flächen 11a, 16a zwei einander zugewandte Klemmflächen für das Festklemmen des umlaufenden äußeren Flanschs 14a der Berstscheibe 14 mittels der nachfolgend näher beschriebenen Klemmvorrichtung ergibt. Zur Befestigung der Berstscheibe 14 über den Flansch 14a weist der obere Befestigungsrahmen 11 Bohrungen 11b auf für den Durchgang des Schafts von Befesti-gungsschrauben 18, die an ihrem unteren Ende beispielsweise an dem Unterteil 16 über Schweißverbindungen 17 angeschweißt sein können. Ebensogut ist natürlich eine Schraubverbindung denkbar, die durch das Unterteil 16 des Befestigungsrahmens hindurch geht. Auf der Oberseite des Oberteils 11 des Befestigungsrahmens ist eine Unterlegscheibe 23 und eine Mutter 19 vorgesehen, die auf das Gewinde der Schraube 18 aufgeschraubt wird.

Gemäß der Erfindung ist nun für das Festlegen des äußeren umlaufenden Flanschs 14a der Berstscheibe 14 eine Kombination aus einem ersten oberen Klemmring 12, einem zweiten darunter liegenden unteren Klemmring 13, der etwas größer ist als der obere Klemmring 12 und einem Dichtungsring 15 vorgesehen, wobei die beiden Klemmringe 12, 13 auf der Oberseite des Flanschs 14a der Berstscheibe 14 angeordnet sind und der Dichtungsring 15 auf der Unterseite des Flanschs 14a, also zwischen diesem Flansch und dem Unterteil 16 des Befestigungsrahmens angeordnet ist. Wie man aus der Zeichnung Fig. 1 erkennt, liegt die Sollbruchstelle, also der Bereich, in dem sich Materialsteg 22, Bohrungen 21 und Schlitz 20 gemäß Darstellung von Fig. 2 befinden, im Bereich der Befestigungsvorrichtung. Mit anderen Worten, die Sollbruchstelle 14c ist oberseitig von dem zweiten Klemmring 13 abgedeckt und ist unterseitig von dem Dichtungsring 15 abgedeckt. Der Schaft der Schraube 18 für die Befestigung geht wie man aus Fig. 1 sieht durch entsprechende Bohrungen des oberen Klemmrings 12, des unteren Klemmrings 13, des Flanschs 14a und des Dichtungsrings 15 hindurch. Wenn man also die Mutter 19 anzieht und den oberen Befestigungsrahmen 11 mit seiner Fläche 11a a gegen die obere Fläche 16a des Unterteils 16 des Befestigungsrahmens anpreßt, dann wird diese Anpressung auf den oberen Klemmring 12, auf Teilbereiche des unteren Klemmrings 13 und Teilbereiche des Dichtungsrings 15 übertragen. Dadurch, daß der Klemmring 12 aber eine geringere Breite hat als der untere Klemmring 13, und der untere Klemmring 13 sich weiter nach innen erstreckt über die gesamte Breite der Klemmfläche 11 a des oberen Befestigungsrahmens und der obere Klemmring 12 sich nur über einen Teil dieser Breite erstreckt, bleibt ein innerer Teilbereich des unteren Klemmrings 13, dervon dem oberen Klemmring 12 nicht abgedeckt ist und auf den daher nur eine geringere Klemmkraft ausgeübt wird. Dieser von dem oberen Klemmring 12 nicht abgedeckte innere Teilbereich des Klemmrings 13 ist genau der Bereich, in dem sich die Sollbruchstelle 14c des Flansches 14a der Berstscheibe befindet. Dies bedeutet, die Sollbruchstelle 14c ist zwar oberseitig von dem unteren Klemmring 13 abgedeckt, wird aber nicht von dem oberen Klemmring 12 abgedeckt. Dadurch entsteht eine sich von außen nach innen verringernde Klemmkraft auf den Flansch 14a der Berstscheibe 14, wobei die Klemmkraft von der Oberseite her im Bereich der Sollbruchstelle 14c geringer ist als die Klemmkraft in den äußeren Bereichen des Flansches 14a der Berstscheibe 14.

Ein entsprechender Verlauf ergibt sich auch für die Klemmkraft, die auf die unter dem Flansch 14a der Berstscheibe 14 liegende Dichtung 15 ausgeübt wird. Die auf diesen Dichtungsring 15 einwirkende Klemmkraft ist in dem äußeren Bereich des Dichtungsrings höherals in dem Bereich, der unterhalb der Sollbruchstelle 14c liegt. Diese Klemmkraft ist aber so gewählt, daß sie einerseits ausreichend hoch ist, daß die Dichtung auf dem Unterteil 16 des Befestigungsrahmens 16 aufliegt und auch unterseitig an dem Flansch 14a anliegt, so daß der Flansch 14a durch die Dichtung 15 noch eine gewisse Abstützung erfährt, ebenso wie sich eine ausreichende Abstützung bzw. ein Widerlager für den Flansch 14a der Berstscheibe auf der Oberseite durch den aufliegenden Klemmring 13 ergibt. Andererseits ist aber die Klemmkraft, die von dem unteren Klemmring 13 ausgeübt wird, im Bereich der Sollbruchstelle 14c so gering, daß sie die Berstfunktion der Berstscheibe 14 nicht negativ beeinflußt. Der obere Klemmring 12 endet vor der Sollbruchstelle 14c und beeinflußt daher die Berstfunktion ebenfalls nicht. Das Material für den unter dem Flansch 14a liegenden Dichtungsring 15 wird vorzugsweise so gewählt, daß das Dichtungsmaterial nicht zu hart ist und man somit keine zu hohe Klemmkraft für das Halten und Befestigen der Berstscheibe 14 benötigt. Andererseits darf das Material des Dichtungsrings 15 aber nicht zu weich sein, so daß der Dichtungsring 15 noch eine ausreichende Abstütz- und Widerlagerfunktion für den Flansch 14a der Berstscheibe bietet.

Um den gewünschten Verlauf der Klemmkraft zu erzielen, kann man zusätzlich den unteren Klemmring 13 an seiner zu der Wölbung 14b hin gewandten Seite etwas aufbiegen nach oben (siehe Fig. 1), so daß dieser in Richtung auf seinen Mittelpunkt hin eine Materialverspannung aufweist und demgemäß im Bereich der Sollbruchstelle eine geringere Klemmkraft aufweist.

Wie man aus Fig. 1 erkennt, ist der Dichtungsring 15 nur so breit wie die Klemmfläche 11 a des oberen Befestigungsrahmens 11 und endet ebenfalls innenseitig mit dem Unterteil 16 des Befestigungsrahmens. Damit liegt der Dichtungsring 15 nur im Rahmenbereich und die Fläche 14b der Wölbung der Berstscheibe 14 ist frei von einer Dichtung. Dadurch ergeben sich hygienische Vorteile, z. B. wenn es sich um eine Berstscheibe für einen Behälter handelt, in dem sich Stoffe befinden, an die besondere hygienische Anforderungen gestellt werden. Gleichzeitig ist die erfindungsgemäße Befestigungsvorrichtung für den Flansch 14a der Berstscheibe 14 aber so ausgebildet, daß auch der Dichtungsring 15 sicher festgehalten wird und sich nicht lösen kann.

## Patentansprüche

1. Druckentlastungsvorrichtung umfassend eine Berstscheibe (14) mit einem mittleren gewölbten Teil und einem äußeren umlaufenden flachen Flansch (14a), in dessen Bereich die Berstscheibe (14) befestigbar ist, wobei die Berstscheibe (14) um den mittleren gewölbten Teil herum angeordnete Schlitze (20) aufweist, die jeweils durch kürzere Materialstege (14c) unterbrochen sind und wobei diese Materialstege (14c) als Sollbruchstelle dienen, wobei im Umfangsbereich der Berstscheibe (14) zumindest abschnittsweise an wenigstens einer Seite eine flache Dichtung (15) vorgesehen ist und wobei die Berstscheibe (14) zwischen zwei Teilen eines Befestigungsrahmens (11, 16) im Bereich ihres Flansches unter Klemmwirkung festspannbar ist und wobei die Sollbruchstellen (14c) im Zwischenraum zwischen dem Oberteil (11) und dem Unterteil (16) des Befestigungsrahmens angeordnet sind, **dadurch gekennzeichnet, dass** für die Befestigung der Berstscheibe (14) im Bereich ihres Flanschs (14a) zwei unterschiedlich breite Klemmringe (12, 13) vorgesehen sind, von denen der eine Klemmring (13) die Sollbruchstellen (14c) und die Schlitze (20) überdeckt und der andere Klemmring (12) die Sollbruchstellen (14c) und Schlitze (20) nicht überdeckt, wobei ein oberer schmalerer Klemmring (12) vorgesehen ist, der Schlitz (20) und Sollbruchstelle (14c) nicht überdeckt und unterhalb dieses oberen Klemmrings (12) der breitere Klemmring (13) angeordnet ist, der dem Flansch (14a) der Berstscheibe zugewandt ist und Schlitz (20) und Sollbruchstelle (14c) abdeckt, wobei sowohl der obere Klemmring (12) als auch der untere Klemmring (13) auf einer Seite des Flanschs (14a) der Berstscheibe angeordnet ist.

2. Druckentlastungsvorrichtung nach Anspruch 1, **dadurch gekennzeichnet, dass** ein flacher Dichtungsring (15) vorgesehen ist, der sich in der Breite nur über den Bereich zwischen dem Oberteil (11) und dem Unterteil (16) des Befestigungsrahmens erstreckt und der auch den Schlitz (20) und die Sollbruchstelle (14c) abdeckt, wobei aber der gewölbte Teil (14b) der Berstscheibe (14) von einer Dichtung frei ist.

3. Druckentlastungsvorrichtung nach einem der Ansprüche 1 bis 2, **dadurch gekennzeichnet, dass** der Dichtungsring (15) auf der den Klemmringen (12, 13) gegenüberliegenden Seite des Flanschs (14a) der Berstscheibe (14) angeordnet ist.

4. Druckentlastungsvorrichtung nach einem der Ansprüche 1 bis 3, **dadurch gekennzeichnet, dass** der untere Klemmring (13) an seiner zu der Wölbung (14b) der Berstscheibe (14) hin gewandten Seite geringfügig aufgebogen ist und somit in Richtung auf seinen Mittelpunkt hin eine Materialvorspannung aufweist.

5. Druckentlastungsvorrichtung nach einem der Ansprüche 1 bis 4, **dadurch gekennzeichnet, dass** der Dichtungsring (15) aus einem gummiartigen Material etwa mittlerer Härte besteht.

## Claims

1. Pressure-relief device comprising a rupture disc (14) with a curved central part and a flat flange (14a) which runs all the way round the outside and in the region of which the rupture disc (14) can be fastened, the rupture disc (14) having slits (20) which are arranged around the curved central part and are interrupted in each case by relatively short material crosspieces (14c), and these material crosspieces (14c) serving as predetermined breaking points, a flat seal (15) being provided, at least in certain sections, on at least one side in the circumferential region of the rupture disc (14), and it being possible for the rupture disc (14) to be fixed with clamping action, in the region of its flange, between two parts of a fastening fame (11, 16), and the predetermined breaking points (14c) being arranged in the interspace between the top part (11) and the bottom part (16) of the fastening frame, **characterized in that** two clamping rings (12, 13) of different widths are provided for the purpose of fastening the rupture disc (14) in the region of its flange (14a), of which one clamping ring (13) covers over the predetermined breaking points (14c) and the slits (20) and the other clamping ring (12) does not cover over the predetermined breaking points (14c) and slits (20), there being provided a top, relatively narrow clamping ring (12), which does not cover over the slit (20) and predetermined breaking point (14c), and the wider clamping ring (13), which is directed towards the flange (14a) of the rupture disc and covers the slit (20) and predetermined breaking point (14c), being arranged beneath this top clamping ring (12), both the top clamping ring (12) and the bottom clamping ring (13) being arranged on one side of the flange (14a) of the rupture disc.

2. Pressure-relief device according to Claim 1, **characterized in that** there is provided a flat sealing ring (15) which, widthwise extends only over the region between the top part (11) and the bottom part (16) of the fastening frame and which also covers the slit (20) and the predetermined breaking point (14c), the curved part (14b) of the rupture disc (14), however, being free of any seal.

3. Pressure-relief device according to either of Claims 1 and 2, **characterized in that** the sealing ring (15) is arranged on that side of the flange (14a) of the rupture disc (14) which is opposite from the clamping rings (12, 13).

4. Pressure-relief device according to one of Claims 1 to 3, **characterized in that** the bottom clamping ring (13) is bent up slightly on its side which is directed towards the curvature (14b) of the rupture disc (14), and thus exhibits material prestressing in the direction of its centre point.

5. Pressure-relief device according to one of Claims 1 to 4, **characterized in that** the sealing ring (15) consists of a rubbery material of approximately medium hardness.

## Revendications

1. Dispositif de détente d'une pression comprenant un disque d'éclatement (14) avec une partie centrale voûtée et une bride plate périphérique extérieure (14a), dans la région de laquelle le disque d'éclatement (14) peut être fixé, dans lequel le disque d'éclatement (14) comporte des fentes (20) disposées autour de la partie centrale voûtée, qui sont chaque fois interrompues par de courtes passerelles de matière (14c) et dans lequel ces passerelles de matière (14c) forment des zones de rupture préférentielle, dans lequel il est prévu, dans la région périphérique du disque d'éclatement (14), un joint d'étanchéité plat (15), au moins localement sur au moins une face, et dans lequel le disque d'éclatement (14) peut être serré dans la région de sa bride par pinçage entre deux parties d'un cadre de fixation (11, 16), et dans lequel les zones de rupture préférentielle (14c) sont disposées dans l'espace intermédiaire entre la partie supérieure (11) et la partie inférieure (16) du cadre de fixation, **caractérisé en ce qu'**il est prévu pour la fixation du disque d'éclatement (14) dans la région de sa bride (14a) deux anneaux de pinçage (12, 13) de largeur différente, dont le premier anneau de pinçage (13) couvre les zones de rupture préférentielle (14c) et les fentes (20) et dont l'autre anneau de pinçage (12) ne couvre pas les zones de rupture préférentielle (14c) et les fentes (20), dans lequel il est prévu un anneau de pinçage supérieur plus étroit (12) qui ne couvre pas la fente (20) et la zone de rupture préférentielle (14c) et, en dessous de cet anneau de pinçage supérieur (12), est disposé l'anneau de pinçage plus large (13) qui est tourné vers la bride (14a) du disque d'éclatement et qui couvre la fente (20) et la zone de rupture préférentielle (14c), dans lequel aussi bien l'anneau de pinçage supérieur (12) que l'anneau de pinçage inférieur (13) est disposé sur une face de la bride (14a) du disque d'éclatement.

2. Dispositif de détente d'une pression selon la revendication 1, **caractérisé en ce qu'**il est prévu un anneau d'étanchéité plat (15), qui ne s'étend en largeur que sur la zone située entre la partie supérieure (11) et la partie inférieure (16) du cadre de fixation et qui couvre également la fente (20) et la zone de rupture préférentielle (14c), mais dans lequel la partie voûtée (14b) du disque d'éclatement (14) est exempte de joint d'étanchéité.

3. Dispositif de détente d'une pression selon l'une quelconque des revendications 1 à 2, **caractérisé en ce que** l'anneau d'étanchéité (15) est disposé sur la face de la bride (14a) du disque d'éclatement (14) opposée aux anneaux de pinçage (12, 13).

4. Dispositif de détente d'une pression selon l'une quelconque des revendications 1 à 3, **caractérisé en ce que** l'anneau de pinçage inférieur (13) est légèrement courbé sur sa face tournée vers la voûte (14b) du disque d'éclatement (14) et présente ainsi une précontrainte de la matière dans la direction de son centre.

5. Dispositif de détente d'une pression selon l'une quelconque des revendications 1 à 4, **caractérisé en ce que** l'anneau d'étanchéité (15) se compose d'une matière caoutchouteuse de dureté sensiblement moyenne.
